# EUROPÄISCHE PATENTSCHRIFT

(11) **EP 3 444 149 B1**
(45) Veröffentlichungstag und Bekanntmachung des Hinweises auf die Patenterteilung: **10.11.2021**
(21) Anmeldenummer: 18182137.2
(22) Anmeldetag: 27.09.2011
(51) Int. Cl.: B60R 21/264, B60R 21/26

(54) **GASGENERATOR UND GASSACKMODUL**
GAS GENERATOR AND AIRBAG MODUL
GÉNÉRATEUR DE GAZ ET MODULE COUSSIN GONFLABLE

(30) Priorität: 15.10.2010 DE 202010014286 U
(43) Veröffentlichungstag der Anmeldung: 20.02.2019
(62) Teilanmeldung aus: 11813864.3
(73) Patentinhaber: ZF Airbag Germany GmbH, 84544 Aschau a. Inn (DE)
(72) Erfinder: Bierwirth, Sebastian, 83562 Rechtmehring (DE); Hofmann, Achim, 84577 Tüßling (DE); Neumayer, Hans-Peter, 84539 Ampfing (DE); Spitzenberger, Dieter, 84559 Kraiburg (DE); Nuiding, Hannes, 73667 Kaisersbach (DE); Schober, Thomas, 83527 Haag (DE); Bommer, Josef, 83547 Babensham (DE); Breddermann, Tobias, 84513 Erharting (DE); Schwebel, Dietmar, 86179 Augsburg (DE)
(74) Vertreter: ZF Patentabteilung - DIPS

(56) Entgegenhaltungen:
- EP-A1- 3 421 302
- WO-A1-03/066384
- DE-A1-102007 054 344
- DE-U1- 20 320 653
- US-A1- 2002 144 621
- US-B1- 6 189 927

## Beschreibung

Die Erfindung betrifft einen Gasgenerator für eine Schutzeinrichtung in einem Fahrzeug nach dem Oberbegriff des Patentanspruchs 1. Die Erfindung betrifft ferner ein Gassackmodul für ein Fahrzeug.

Gasgeneratoren für Schutzeinrichtungen in einem Fahrzeug sind insbesondere dazu vorgesehen, bestimmte Teile anzutreiben (Aufstellen von Motorhauben, Straffen des Sicherheitsgurtes, Verschieben von Polstern oder dergleichen) oder Gassäcke aufzublasen, um einen Aufprall eines Fahrzeuginsassen auf harte Fahrzeugteile zu verhindern.

Die Anforderungen an die Effektivität eines Gasgenerators sind generell sehr hoch. In kürzester Zeit muss eine bestimmte Menge an Gas bereitgestellt werden, das nicht zu heiß und möglichst partikelfrei sein soll. Ein Gasgenerator sollte auch möglichst leicht sein und wenig Bauraum in Anspruch nehmen, damit z. B. im Falle des Einbaus in einem Lenkrad bestimmte Vorgaben des Lenkraddesigns eingehalten werden können.

Aus der Schrift US 2002/0144621 A1 ist ein Gasgenerator der eingangs genannten Art bekannt.

Die Erfindung verbessert eine solche bekannte Konstruktion hinsichtlich einer Ausgestaltung einer Austrittsöffnung für ein Abbrandgas.

Die Erfindung schafft einen kompakten und effektiven Gasgenerator mit einem sehr effizienten Aufbau, der den obigen Anforderungen genügt.

Bei dem Gasgenerator der Erfindung umfasst der Gasgenerator eine Brennkammerhülse, die eine mit Treibstoff gefüllte Brennkammer wenigstens teilweise umschließt. Die Brennkammerhülse ist so ausgelegt, dass sie durch einen beim Abbrand des Treibstoffs entstehenden Druck ihre Lage und/oder Form so ändert, dass durch eine Austrittsöffnung ein beim Abbrand des Treibstoffs entstehendes Abbrandgas freigegeben wird. Die Austrittsöffnung führt aus der Brennkammer heraus..

Erfindungsgemäß ist die Brennkammerhülse auf ein Trägerbauteil des Gasgenerators aufgesteckt, wobei die Austrittsöffnung dadurch entsteht, dass sich die Brennkammerhülse wenigstens teilweise von dem Trägerbauteil löst.

Dabei ist bevorzugt die Brennkammerhülse auf einen Anzünderträger, aufgesteckt. Die Austrittsöffnung entsteht dadurch, dass sich die Brennkammerhülse wenigstens teilweise von dem Trägerbauteil löst, sodass sich ein Spalt zwischen der Brennkammerhülse und dem Trägerbauteil bildet. Durch den Spalt kann das Abbrandgas aus der Brennkammer entweichen.

Besonders vorteilhaft ist ein Aufbau, der so ausgelegt ist, dass sich der Spalt bezogen auf eine Mittelachse der Brennkammerhülse nicht vollständig umlaufend oder zumindest nicht mit gleichbleibender Breite ausbildet. Der Spalt hat seine größte Breite in einem Bereich, der von einem außerhalb der Brennkammer angeordneten Filter abgewandt ist und/oder den größtmöglichen Abstand zum Filter hat. Somit kann eine Beschädigung des Filters vermieden werden, da das Abbrandgas erst nach Überwindung einer größeren Strecke oder auf Umwegen auf den Filter trifft.

Eine solche Ausgestaltung erlaubt es, bei der Herstellung der Brennkammerhülse auf Austrittsöffnungen vollständig zu verzichten, da die Austrittsöffnung gemäß der Erfindung erst bei Bedarf erzeugt wird. Dies hat neben der weniger aufwändigen Herstellung der Brennkammerhülse den Vorteil, dass keine Austrittsöffnungen abgedichtet werden müssen.

Dementsprechend ist vorzugsweise vorgesehen, dass die Brennkammerhülse vor dem Abbrand des Treibstoffs keine Austrittsöffnung aufweist.

In einer bevorzugten Ausführungsform der Erfindung bewegt sich die Brennkammerhülse durch den beim Abbrand des Treibstoffs entstehenden Druck auf einen Deckenabschnitt eines Diffusors des Gasgenerators zu, wobei die Bewegung vorzugsweise durch den Deckenabschnitt begrenzt wird. Der Druck in der Brennkammer wird also für eine kontrollierte Bewegung der Brennkammerhülse genutzt.

Eine Fortführung dieses Konzepts sieht vor, dass sich die Brennkammerhülse teilweise am Deckenabschnitt des Diffusors abstützt, vorzugsweise bereits vor einer Aktivierung des Gasgenerators, und dass durch den Druck ein Kippen und/oder eine ungleichmäßige Verformung der Brennkammerhülse hervorgerufen wird. Das Kippen bzw. die Verformung wird bewusst forciert, um dadurch die gewünschte Austrittsöffnung zu schaffen.

Gemäß dem besonderen Befüllkonzept der Brennkammer ist die Brennkammerhülse auf einen Treibstoffkanister aufgeschoben, der mit Treibstoff gefüllt ist und einen Treibstoffkanisterboden mit einem oder mehreren Löchern aufweist, durch die das Abbrandgas zur Austrittsöffnung gelangt. Auf diese Weise ist mit einfachen Mitteln eine Strömungsverbindung für das Abbrandgas aus dem Treibstoffkanister zur Austrittsöffnung sichergestellt.

Bei entsprechender Auslegung des Treibstoffkanisters kann das bzw. können die Löcher im Treibstoffkanisterboden auch erst durch den beim Abbrand des Treibstoffs entstehenden Druck und ein dadurch bedingtes Aufreißen des Treibstoffkanisterbodens gebildet werden.

Der Gasgenerator kann eine Anzünderhülse umfassen, die einen Anzünder und eine insbesondere mit einer Verstärkerladung gefüllte Anzünderkammer wenigstens teilweise umschließt und an eine insbesondere mit Treibstoff gefüllte erste Brennkammer angrenzt. Die Anzünderhülse weist bezogen auf eine Mittelachse der Anzünderhülse in Umfangsrichtung ungleichmäßig verteilte Überströmöffnungen auf. Zweck dieser Maßnahme ist es, das aus der Anzünderhülse überströmende Heißgas, mit dem der Treibstoff der angrenzenden Brennkammer entzündet wird, auf bevorzugte Bereiche der Brennkammer zu lenken. Dies ermöglicht ein optimales Anzünden des Treibstoffs in der Brennkammer.

Im Einklang mit diesem Konzept kann eine vorbestimmte Orientierung der Anzünderhülse so festgelegt sein, dass die Überströmöffnungen nicht direkt auf einen außerhalb der Anzünderhülse angeordneten Filter gerichtet sind. Dadurch wird der Filter keiner unnötigen Belastung ausgesetzt, und es wird einer Beschädigung des Filters durch das aus der Anzünderhülse überströmende Heißgas, das mit Partikeln versetzt ist, vorgebeugt.

Gemäß einer besonderen Weiterbildung dieses Erfindungsaspekts weist die Anzünderhülse eine von ihrer Mittelachse entfernte oder sich unsymmetrisch von der Mittelachse erstreckende Markierung auf, die die vorbestimmte Orientierung der Anzünderhülse angibt. Die Markierung hilft dabei, Fehler bei der Montage der Anzünderhülse hinsichtlich deren Orientierung zu vermeiden.

Als Markierung eignet sich insbesondere eine Nase oder eine Ausnehmung an der Anzünderhülse. Für die Montage kann dann ein Werkzeugträger vorgesehen werden, der eine dazu passende Ausnehmung bzw. Nase hat und die Anzünderhülse so aufnimmt, dass sie automatisch in der vorbestimmten Orientierung in den Gasgenerator eingebaut wird.

Zusätzlich oder alternativ kann eine Gestaltung der Anzünderhülse vorgesehen sein, die so auf eine Gestaltung eines benachbarten Bauteils des Gasgenerators abgestimmt ist, dass eine Montage der Anzünderhülse im Gasgenerator nur in der vorbestimmten Orientierung möglich ist. Damit sind Fehler bei der Montage praktisch gänzlich ausgeschlossen.

Beispielsweise kann bei einer versetzt zu einer Mittelachse eines Diffusors angeordneten Anzünderhülse vorgesehen sein, dass ein einem Deckenabschnitt des Diffusors gegenüberliegender Boden der Anzünderhülse eine Schräge aufweist, die so auf eine Wölbung des Deckenabschnitts des Diffusors abgestimmt ist, dass die Anzünderhülse nur in der vorbestimmten Orientierung unter den Deckenabschnitt des Diffusors passt.

In der vorbestimmten Orientierung der Anzünderhülse definieren die Überströmöffnungen in Umfangsrichtung vorteilhaft einen maximalen Winkelbereich, der sich zu beiden Seiten einer Verbindungslinie zwischen der Mittelachse der Anzünderhülse und dem von der Mittelachse maximal entfernten Abschnitt des Filters erstreckt. Dadurch wird der Filter bestmöglich geschont.

Eine Auslegung der Überströmöffnungen, gemäß der der Winkelbereich Bereiche einschließt, in denen ein nicht durch Bauteile des Gasgenerators blockierter Abstand zum Filter maximal ist, ermöglicht eine optimale "Ausbeute" der aus den Überströmöffnungen austretenden Anzündstrahlen im Sinne einer maximalen Wirklänge. Der Treibstoff in der Brennkammer ist dabei nicht als Bauteil des Gasgenerators zu verstehen; im Gegenteil: es soll möglichst viel Treibstoff zwischen der Anzünderhülse und dem Filter von den Anzündstrahlen der abbrennenden Verstärkerladung erfasst werden.

Der Winkelbereich kann auch ein Brennkammerbauteil, insbesondere eine Brennkammerhülse, einschließen, welches eine zweite Brennkammer umgibt, die selbst wiederum wenigstens teilweise von der ersten Brennkammer umgeben ist.

In einer bevorzugten Ausführungsform ist der Winkelbereich stumpf und liegt vorzugsweise zwischen 90° und 135°, weiter vorzugsweise zwischen 100° und 120°, und beträgt weiter vorzugsweise etwa 110°.

Im Hinblick auf eine Optimierung des Brennraums, der die Anzünderhülse umgibt, ist eine Gestaltung der Anzünderhülse vorteilhaft, bei der sich die Anzünderhülse in axialer Richtung zu einem Boden der Anzünderhülse hin radial verjüngt. In diesem Fall steht aufgrund der Verjüngung außerhalb der Anzünderhülse mehr Raum für den Treibstoff zur Verfügung.

Der Gasgenerator kann eine Anzünderhülse umfassen, die einen Anzünder und eine insbesondere mit einer Verstärkerladung gefüllte Anzünderkammer wenigstens teilweise umschließt und an eine einer ersten Aktivierungsstufe des Gasgenerators zugeordnete erste Brennkammer angrenzt. Der Gasgenerator umfasst ferner eine Brennkammerhülse, die eine mit Treibstoff gefüllte, einer zweiten Aktivierungsstufe des Gasgenerators zugeordnete zweite Brennkammer wenigstens teilweise umschließt. Beide Hülsen sind nebeneinander und vorzugsweise unterschiedlich versetzt zu einer Mittelachse des Gasgenerators angeordnet. Diese Anordnung führt zu einem äußerst kompakten und effizienten Aufbau eines zweistufigen Gasgenerators.

Besonders effizient ist eine Ausgestaltung, bei der der Abstand zwischen den Mittelachsen der Anzünderhülse und der Brennkammerhülse zwischen 22,5 und 27,5 mm, vorzugsweise zwischen 23,5 und 26,5 mm liegt und weiter vorzugsweise etwa 25 mm beträgt.

Bevorzugt liegt das Verhältnis des minimalen Innendurchmessers der Brennkammerhülse zum minimalen Innendurchmesser der Anzünderhülse zwischen 1,64 und 2,63, vorzugsweise zwischen 1,83 und 2,32. Weiter vorzugsweise beträgt dieses Verhältnis etwa 2,06.

Eine optimale Abstimmung zwischen kompaktem Aufbau des zweistufigen Generators und effektiver Kühlung und Filterung des erzeugten Gases ergibt sich zum einen durch eine wenigstens teilweise radiale Begrenzung der ersten Brennkammer durch einen - bezogen auf eine Mittelachse des Gasgenerators - wenigstens teilweise umlaufenden Filter, wobei das Verhältnis des Innendurchmessers des Filters zum minimalen Innendurchmesser der Anzünderhülse zwischen 3,19 und 4,76, vorzugsweise zwischen 3,50 und 4,27 liegt und weiter vorzugsweise etwa 3,85 beträgt.

Zum anderen wird bei einer solchen Filtergestaltung eine optimale Abstimmung bei einem Verhältnis des Innendurchmessers des Filters zum minimalen Innendurchmesser der Brennkammerhülse erreicht, das zwischen 1,66 und 2,11, vorzugsweise zwischen 1,76 und 1,99 liegt und weiter vorzugsweise etwa 1,87 beträgt.

Gemäß einer effizienten Ausgestaltung des Gasgenerators liegt das Verhältnis des Außendurchmessers des Gasgenerators zum minimalen Innendurchmesser der Anzünderhülse zwischen 4,09 und 5,98, vorzugsweise zwischen 4,46 und 5,39, und beträgt weiter vorzugsweise etwa 4,89. Unter dem Außendurchmessers des Gasgenerators ist dabei der Außendurchmesser des äußersten Gasgeneratorbauteils zu verstehen, beispielsweise eines Diffusors, wobei ein sich seitlich (radial) erstreckender Flansch nicht berücksichtigt wird.

Gemäß einer weiteren effizienten Ausgestaltung liegt das Verhältnis des Außendurchmessers des Gasgenerators zum minimalen Innendurchmesser der Brennkammerhülse zwischen 2,13 und 2,66, vorzugsweise zwischen 2,24 und 2,50, und beträgt weiter vorzugsweise etwa 2,38.

Eine besonderer Aufbau sieht vor, dass der axiale Abstand einer offenen Seite der Anzünderhülse von einem Boden eines Verschlusskörpers des Gasgenerators ungleich dem axialen Abstand einer offenen Seite der Brennkammerhülse vom Boden des Verschlusskörpers ist, wobei der Abstand der Anzünderhülse vorzugsweise größer ist. Da die Anzünderhülse und die Brennkammerhülse unterschiedliche Durchmesser haben, wird dadurch die Verwendung von im Wesentlichen gleich aufgebauten Trägerbauteilen für beide Hülsen ermöglicht, die auf gleicher Höhe im Verschlusskörperboden eingebaut sein können und beide sowohl einen auf die Anzünderhülse abgestimmten ersten Aufnahmeabschnitt als auch einen axial hierzu versetzten, auf die Brennkammerhülse abgestimmten zweiten Aufnahmeabschnitt aufweisen.

Im Hinblick auf den besonderen Mechanismus der zweiten Aktivierungsstufe, bei dem die aus der Brennkammerhülse herausführende Austrittsöffnung erst durch ein druckbedingtes Anheben der Brennkammerhülse entsteht, ist eine Halterung der Anzünderhülse und der Brennkammerhülse vorteilhaft, bei der die Anzünderhülse und die Brennkammerhülse auf einen ersten Anzünderträger bzw. auf einen zweiten Anzünderträger aufgesteckt sind, wobei die axiale Höhe des Kontaktbereichs zwischen der Anzünderhülse und dem ersten Anzünderträger größer ist als die axiale Höhe des Kontaktbereichs zwischen der Brennkammerhülse und dem zweiten Anzünderträger. Die Brennkammerhülse löst sich dann bereits nach einer geringen axialen Verschiebung vom zweiten Anzünderträger und gibt dadurch die gewünschte Austrittsöffnung frei. Bei der Anzünderhülse kann zwar auch eine axiale Verschiebung auftreten, eine Freigabe einer (zusätzlichen) Austrittsöffnung ist aber nicht vorgesehen.

Dementsprechend ist eine bevorzugte Ausführungsform des Gasgenerators so ausgelegt, dass sowohl die Anzünderhülse durch den beim Abbrand der Verstärkerladung entstehenden Druck als auch die Brennkammerhülse durch den beim Abbrand des Treibstoffs entstehenden Druck angehoben werden, vorzugsweise in Richtung eines Deckenabschnitts eines Diffusors des Gasgenerators. Durch das Anheben der Brennkammerhülse wird eine Austrittsöffnung freigegeben, vorzugsweise in Form eines Austrittspalts, die aus der Brennkammerhülse herausführt, wogegen durch das Anheben der Anzünderhülse keine Austrittsöffnung freigegeben wird. Letzteres ist nicht erwünscht, da in der Anzünderhülse bereits vorteilhaft positionierte Überströmöffnungen vorhanden sind, die spätestens beim Abbrand der Verstärkerladung freigegeben werden.

Vorzugsweise ist der Diffusor so ausgelegt, dass ein Deckenabschnitt die Bewegung der Anzünderhülse und die Bewegung der Brennkammerhülse begrenzt.

Der Gasgenerator kann einen Filter umfassen und ein eine Brennkammer wenigstens teilweise umschließendes Brennkammerbauteil, insbesondere einer Brennkammerhülse. Der Filter weist einen kritischen Filterabschnitt auf, der dem Brennkammerbauteil näher als die restlichen Filterbereiche kommt. Der kritische Filterabschnitt weist im Vergleich zu Bereichen des Filters, die an den kritischen Filterabschnitt angrenzen, eine verringerte Dicke auf. Insbesondere ist zwischen dem Brennkammerbauteil und dem kritischen Filterabschnitt ein Spalt gebildet. Diese Maßnahme stellt einen Überzündschutz dar. Es muss sichergestellt sein, dass der Treibstoff der zweiten Aktivierungsstufe während und gegebenenfalls nach dem Abbrand des Treibstoffs der ersten Aktivierungsstufe nicht selbsttätig (thermisch) gezündet wird. Dabei ist ein Wärmeeintrag auf den Treibstoff der zweiten Aktivierungsstufe durch das Abbrennen des Treibstoffs der ersten Aktivierungsstufe selbst nicht unbedingt kritisch. Allerdings könnte eine Aufheizung des Filters und speziell die danach (verzögernd wirkende) Wärmerückstrahlung des aufgeheizten Filters negative Auswirkungen haben, speziell im Bereich nahe der Brennkammer der zweiten Aktivierungsstufe. Die Verjüngung des kritischen Filterabschnitts schafft deshalb vorsorglich einen wärmeisolierenden Abstand (Luftspalt) zwischen dem Filter und dem Brennkammerbauteil.

Vorzugsweise ist das Material, aus dem der Filter gebildet ist, im kritischen Filterabschnitt höher verdichtet als in den angrenzenden Bereichen. Der kritische Filterabschnitt kann in diesem Fall einfach durch eine räumlich begrenzte Komprimierung des Filters hergestellt werden, ohne dass Material abgetragen werden muss.

Zur weiteren Verbesserung kann das Brennkammerbauteil wenigstens in dem Bereich, der dem kritischen Filterabschnitt gegenüberliegt, eine erhöhte Materialdicke aufweisen. Die Kombination der Materialverdickung des Brennkammerbauteils mit der gegenüberliegenden Filterverjüngung ergibt einen optimalen Überzündschutz.

Gemäß einer bevorzugten Anordnung erstreckt sich der Filter entlang einer umlaufenden Wand des Gasgenerators, die eine Kammer des Gasgenerators umgibt, in welcher das Brennkammerbauteil angeordnet ist.

Im Falle eines Brennkammerbauteils, das sich über eine größere axiale Höhe als der Filter erstreckt, ist es ausreichend, wenn das Brennkammerbauteil im Wesentlichen nur in dem axialen Bereich eine erhöhte Materialdicke aufweist, in dem sich auch der Filter erstreckt. Somit können Materialkosten und Gewicht eingespart werden.

Gemäß einer effizienten Ausgestaltung liegt das Verhältnis der minimalen Dicke des kritischen Filterabschnitts zur Dicke der angrenzenden Bereiche des Filters zwischen 0,43 und 0,93, vorzugsweise zwischen 0,53 und 0,78, und beträgt weiter vorzugsweise etwa 0,65.

Gemäß einer weiteren effizienten Ausgestaltung des Überzündschutzes liegt das Verhältnis der minimalen Dicke des kritischen Filterabschnitts zur maximalen Breite des Spalts zwischen 1,17 und 2,85, vorzugsweise zwischen 1,50 und 2,23, und beträgt weiter vorzugsweise etwa 1,83.

Eine besondere Gestaltung und Anordnung des Filters sieht vor, dass der Gasgenerator auf einer ersten axialen Stirnseite durch einen Diffusor mit einer im Wesentlichen axial verlaufenden Umfangswand geschlossen ist, wobei sich der Filter in axialer Richtung über die Umfangswand hinaus erstreckt.

Der Gasgenerator kann eine umlaufende Wand umfassen, die insbesondere eine Brennkammer umgibt, und einen Filter, der wenigstens teilweise entlang der Wand verläuft. Die Wand weist wenigstens einen Stützabschnitt auf. Der Stützabschnitt bildet eine axiale Halterung für den Filter und ist vorzugsweise einstückig mit der Wand ausgeführt. Vorteil dieser Wandhalterung für den Filter ist, dass sich der Filter im Inneren des Gasgenerators nicht unnötig über die gesamte Höhe erstrecken muss. Dadurch kann Filtermaterial eingespart werden, und es steht mehr Raum für Treibstoff in der vom Filter dann nur teilweise umgebenen Brennkammer zur Verfügung. Auf ein ansonsten notwendiges separates Stützelement kann verzichtet werden.

Es kann entweder nur ein Stützabschnitt vorgesehen sein, der durch eine vollständig umlaufende, vorzugsweise eingeprägte Sicke gebildet ist, oder es können mehrere Stützabschnitte durch vorzugsweise eingeprägte Sicken gebildet sein. Gemäß der letzteren Alternative können die Sicken in Umfangsrichtung voneinander beabstandet sein.

Gemäß einer bevorzugten Ausführungsform ist der Gasgenerator auf einer axialen Stirnseite durch einen Verschlusskörper geschlossen, und der bzw. die Stützabschnitte sind in einem hochgezogenen Rand des Verschlusskörpers gebildet.

Eine vorteilhafte Ausgestaltung sieht vor, dass sich der Filter nur mit einem radial äußeren Bereich auf dem bzw. den Stützabschnitten abstützt. Im Falle einer eingeprägten Sicke muss sich diese also nicht über die gesamte Dicke des ringförmigen Filters nach innen erstrecken.

Der Gasgenerator kann eine mit einem Treibstoff gefüllte erste Brennkammer umfassen, die einer ersten Aktivierungsstufe des Gasgenerators zugeordnet ist und auf einer Seite durch einen Deckel, insbesondere einen Diffusor geschlossen ist. Zwischen dem Treibstoff und dem Deckel ist ein erster Füllkörper angeordnet. Der erste Füllkörper weist wenigstens eine, vorzugsweise kreisförmige, Aussparung auf. In die Aussparung ragt eine Hülse hinein, insbesondere eine Anzünderhülse, die der ersten Aktivierungsstufe des Gasgenerators zugeordnet ist, oder eine Brennkammerhülse, die einer zweiten Aktivierungsstufe des Gasgenerators zugeordnet ist. Ein so gestalteter Füllkörper hat, abgesehen von der Erfüllung seines Hauptzwecks, mehrere Vorteile. So unterstützt er die Stabilität der in die Aussparung hineinragenden Hülse hinsichtlich einem unerwünschten Verschieben oder Kippen in seitlicher Richtung. Außerdem erlaubt die besondere Ausgestaltung des Füllkörpers eine in axialer Richtung äußerst kompakte Bauform, da die Hülse in den Füllkörper hineinragt, sodass der Raum zwischen der Hülse und dem Deckel minimiert werden kann.

Insbesondere bei einem zweistufigen Gasgenerator weist der erste Füllkörper gemäß einer bevorzugten Ausführungsform zwei Aussparungen unterschiedlicher Größe auf, wobei in die kleinere Aussparung vorzugsweise die Anzünderhülse und in die größere Aussparung vorzugsweise die Brennkammerhülse hineinragt.

Eine effiziente Ausgestaltung sieht vor, dass das Verhältnis des Durchmessers der größeren Aussparung zum Durchmesser der kleineren Aussparung zwischen 1,52 und 2,25, vorzugsweise zwischen 1,67 und 2,03 liegt und weiter vorzugsweise etwa 1,84 beträgt.

Die Herstellung des ersten Füllkörpers kann vereinfacht werden, indem der erste Füllkörper wenigstens zweiteilig ausgeführt wird. Ein weiterer Vorteil der zweiteiligen Ausführung besteht darin, dass beim Einbau des Füllkörpers größere Toleranzen ausgeglichen werden können als bei einer einstückige Ausführung des Füllkörpers.

Besonders zweckmäßig ist in diesem Fall ein Design, bei dem die zwei Teilkörper des ersten Füllkörpers jeweils die Form eines Doppelhalbmonds aufweisen. Die Füllkörper können dann identische Formen haben und symmetrisch zueinander angeordnet werden.

Das bevorzugte Material für den Füllkörper ist Silikon, das einerseits nachgiebig ist, um den Treibstoff zur Vermeidung von Geräuschen unter Druck festzuhalten. Andererseits reagiert das Silikon im Aktivierungsfall des Gasgenerators nicht in unerwünschter Weise mit dem Treibstoff oder mit Bauteilen des Gasgenerators.

Der Gasgenerator kann einen bezogen auf eine Mittelachse des Gasgenerators radial abstehenden Generatorflansch umfassen zur Befestigung des Gasgenerators an einem Generatorträger. Der Generatorflansch hat im Wesentlichen die Form eines Rechtecks. Die rechteckige Gestaltung des Generatorflanschs ermöglicht eine platzsparende Gestaltung des Generatorträgers und des den Gasgenerator umgebenden Bauraums, insbesondere dann, wenn der Flansch nur geringfügig breiter als der Außendurchmesser des Außengehäuses des Gasgenerators ist. Unter einer im Wesentlichen rechteckigen Form ist dabei nicht unbedingt ein perfektes Rechteck zu verstehen; grundsätzlich rechteckige Formen mit abgerundeten Ecken, randseitigen Ausnehmungen, etc. sollen mit umfasst sein.

Bei einem bevorzugten Design ist vorgesehen, dass der Gasgenerator ein Außengehäuse mit einem vorzugsweise kreisförmigen Querschnitt hat, dessen Mittelachse durch den Mittelpunkt des Generatorflanschs verläuft.

Bezüglich der Dimensionen des Generatorflanschs hat sich für die Anbringung des Gasgenerators am Generatorträger ein Verhältnis von Länge zu Breite des Rechtecks zwischen 1,12 und 1,31, vorzugsweise zwischen 1,16 und 1,27 als vorteilhaft herausgestellt. Weiter vorzugsweise beträgt dieses Verhältnis etwa 1,21.

Ebenfalls bevorzugt wird ein Verhältnis der Länge des Rechtecks zum Außendurchmesser des Außengehäuses, das zwischen 1,24 und 1,48, vorzugsweise zwischen 1,30 und 1,42 liegt und weiter vorzugsweise etwa 1,36 beträgt.

Bezüglich der Breite des Generatorflanschs wird ein Verhältnis der Breite des Rechtecks zum Außendurchmesser des Außengehäuses bevorzugt, das zwischen 1,01 und 1,23, vorzugsweise zwischen 1,06 und 1,17 liegt und weiter vorzugsweise etwa 1,12 beträgt.

Der Gasgenerator kann eine Anzündereinheit umfassen, die eine Markierung aufweist. Die Markierung erleichtert einen Einbau der Anzündereinheit, bei dem diese eine vorbestimmte Orientierung hat. Dies ist insbesondere vor dem Hintergrund vorteilhaft, dass die elektrischen Anschlusspins des Anzünders orientiert im Gasgenerator verbaut werden müssen, um später ein korrektes Aufstecken des Gegensteckers in die Schnittstelle/Kavität des Anzünderträgers der Anzündereinheit sicherzustellen. Das Werkzeug, welches beim Zusammenbau des Gasgenerators die vormontierte Anzündeinheit dem Gasgeneratorbauteil orientiert zuführt, in das die Anzündereinheit eingesetzt wird, muss hierzu nicht in die sensible Schnittstelle des Anzünderträgers "hineinfahren". Somit werden die empfindlichen Anschlusspins des Anzünders keinem unnötigen Werkzeugkontakt ausgesetzt.

Als Markierung bietet sich insbesondere eine Einfräsung an.

Eine vereinfachte Handhabung ergibt sich dadurch, dass die Anzündereinheit eine vormontierte Einheit mit einem Anzünderträger und einem darin gehaltenen Anzünder ist, die vorzugsweise in eine Bodenöffnung eines Verschlusskörpers des Gasgenerators einsetzbar ist.

Der Gasgenerator kann einen Diffusor umfassen, der mit einem Verschlusskörper ein vorzugsweise im Wesentlichen rotationssymmetrisches Außengehäuse des Gasgenerators bildet, wobei die Wanddicke des Verschlusskörpers wenigstens abschnittsweise größer als die des Diffusors ist. Dieser Aspekt beruht auf der Erkenntnis, dass eine höhere Wanddicke des Verschlusskörpers für die Aufnahme einer oder mehrerer Anzündereinheiten von Vorteil ist, während eine vergleichsweise dünne Wandstärke des Diffusors ein erwünschtes Ausbauchen des Diffusors im Aktivierungsfall ermöglicht.

Dementsprechend ist bei einer bevorzugten Gestaltung vorgesehen, dass der Verschlusskörper einen im Wesentlichen ebenen Boden aufweist, in dem vorzugsweise wenigstens eine Öffnung zur Aufnahme eines Anzünderträgers gebildet ist. Wenigstens der Boden hat eine größere Wanddicke als der Diffusor.

Der Gasgenerator kann ein eine Brennkammer wenigstens teilweise umschließendes Brennkammerbauteil umfassen, insbesondere eine Brennkammerhülse, und einen Diffusor mit einem Deckenabschnitt. Bezogen auf eine Mittelachse des Diffusors variiert der axiale Abstand zwischen dem Brennkammerbauteil und dem Deckenabschnitt. Bei einer symmetrischen Wölbung des Deckenabschnitts und einer bezüglich der Mittelachse senkrechten Anordnung des dem Deckenabschnitt gegenüberliegenden Abschnitts des Brennkammerbauteils entspricht dies einer bezüglich der Mittelachse versetzten Anordnung des Brennkammerbauteils.

Vorzugsweise berührt das Brennkammerbauteil den Deckenabschnitt des Diffusors in einem nicht aktivierten Zustand des Gasgenerators wenigstens an einer Stelle. Aufgrund des an den anderen Stellen vorhandenen Abstands zwischen dem Brennkammerbauteil und dem Deckenabschnitt wird dadurch ein Kippen des Brennkammerbauteils (Brennkammerhülse) ermöglicht, wie es gemäß der besonderen Funktionsweise der zweiten Aktivierungsstufe des Gasgenerators vorgesehen ist.

Das Kippen wird begünstigt durch eine Ausgestaltung, bei der der axiale Abstand zwischen dem Brennkammerbauteil und dem Deckenabschnitt des Diffusors an der Mittelachse des Diffusors am größten ist und sich mit zunehmendem radialem Abstand von der Mittelachse vorzugsweise stetig verringert.

Gemäß einer bevorzugten Ausführungsform liegt der maximale Abstand zwischen dem Brennkammerbauteil und dem Deckenabschnitt des Diffusors zwischen 2,3 und 3,7 mm, vorzugsweise zwischen 2,7 und 3,3 mm, und beträgt weiter vorzugsweise etwa 3,0 mm.

Ebenso kann eine versetzt zur Mittelachse des Diffusors angeordnete Anzünderhülse vorgesehen sein, deren axialer Abstand zum Deckenabschnitt des Diffusors in ähnlicher Weise variiert, insbesondere indem sich der axiale Abstand der Anzünderhülse vom Deckenabschnitt des Diffusors mit zunehmendem radialem Abstand von der Mittelachse des Diffusors vorzugsweise stetig verringert.

Gemäß einer bevorzugten Ausführungsform liegt der maximale Abstand zwischen der Anzünderhülse und dem Deckenabschnitt des Diffusors zwischen 2,1 und 3,5 mm, vorzugsweise zwischen 2,5 und 3,1 mm, und beträgt weiter vorzugsweise etwa 2,8 mm.

Der Gasgenerator kann eine erste Brennkammer umfassen, die einer ersten Aktivierungsstufe des Gasgenerators zugeordnet ist, und eine zweite Brennkammer, die einer zweiten Aktivierungsstufe des Gasgenerators zugeordnet ist. Die zweite Brennkammer ist wenigstens teilweise von der ersten Brennkammer umgeben und weist ein kleineres Volumen als die erste Brennkammer auf. Diese Anordnung und Dimensionierung der Brennkammern ermöglicht einen auch in radialer Richtung äußerst kompakten Aufbau eines zweistufigen Gasgenerators.

Eine effiziente Ausgestaltung sieht vor, dass das Verhältnis des Volumens der ersten Brennkammer zum Volumen der zweiten Brennkammer zwischen 2,07 und 3,78, vorzugsweise zwischen 2,41 und 3,21 liegt und weiter vorzugsweise etwa 2,82 beträgt.

Eine weitere effiziente Ausgestaltung sieht vor, dass das Verhältnis des Volumens der ersten Brennkammer zum Volumen einer von der ersten Brennkammer wenigstens teilweise umgebenden Anzünderhülse zwischen 9,00 und 35,0, vorzugsweise zwischen 11,6 und 22,0 liegt und weiter vorzugsweise etwa 15,5 beträgt.

Die obigen Verhältnisse sind insbesondere bei einem Gasgeneratordesign vorteilhaft, bei dem das Verhältnis des Außendurchmessers eines Außengehäuses des Gasgenerators zur Höhe des Außengehäuses zwischen 1,38 und 1,78 liegt und weiter vorzugsweise etwa 1,57 beträgt.

Ein solcher Gasgenerator, dessen Bauhöhe, insbesondere die axiale Höhe eines Außengehäuses des Gasgenerators, zwischen 30 und 50 mm liegt und vorzugsweise etwa 40 mm beträgt, ist besonders geeignet für ein Fahrergassackmodul in einem Fahrzeug, mit einem Gassack, der ein Volumen von 40 bis 60 Liter aufweist.

Eine andere effiziente Ausgestaltung sieht vor, dass das Verhältnis des Volumens der ersten Brennkammer zum Volumen der zweiten Brennkammer zwischen 2,34 und 3,27, vorzugsweise zwischen 2,54 und 3,00 liegt und weiter vorzugsweise etwa 2,76 beträgt.

Eine weitere effiziente Ausgestaltung sieht vor, dass das Verhältnis des Volumens der ersten Brennkammer zum Volumen einer von der ersten Brennkammer wenigstens teilweise umgebenden Anzünderhülse zwischen 13,5 und 31,0, vorzugsweise zwischen 16,0 und 24,0 liegt und weiter vorzugsweise etwa 19,3 beträgt.

Die zuletzt angegebenen Verhältnisse sind insbesondere bei einem Gasgeneratordesign vorteilhaft, bei dem das Verhältnis des Außendurchmessers eines Außengehäuses des Gasgenerators zur Höhe des Außengehäuses zwischen 0,94 und 1,16 liegt und weiter vorzugsweise etwa 1,05 beträgt.

Ein solcher Gasgenerator, dessen Bauhöhe, insbesondere die axiale Höhe eines Außengehäuses des Gasgenerators, zwischen 50 und 70 mm liegt und vorzugsweise etwa 60 mm beträgt, ist besonders geeignet für ein Beifahrergassackmodul in einem Fahrzeug, mit einem Gassack, der ein Volumen von 60 bis 135 Liter aufweist.

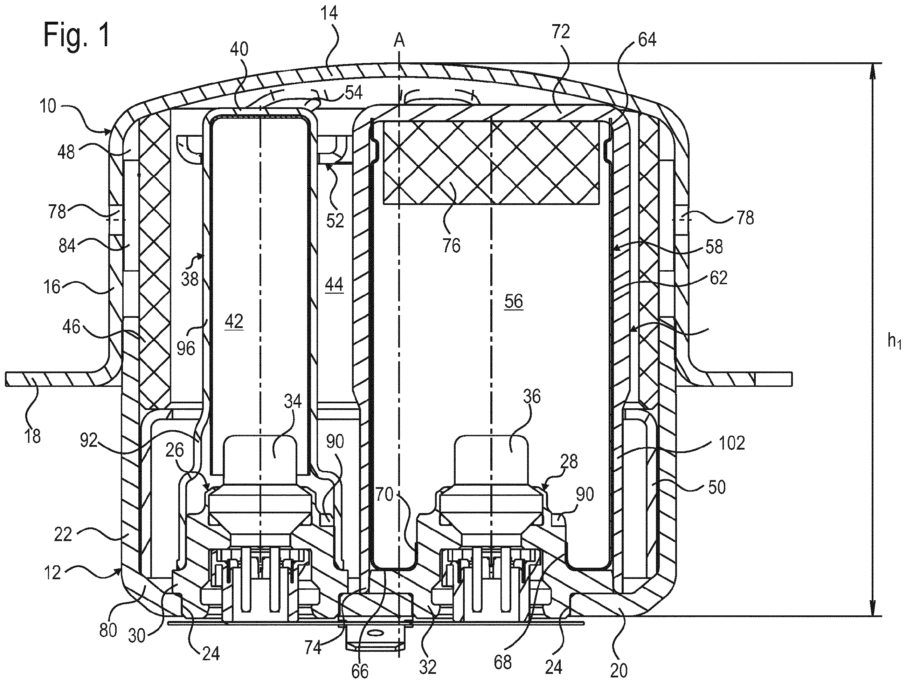

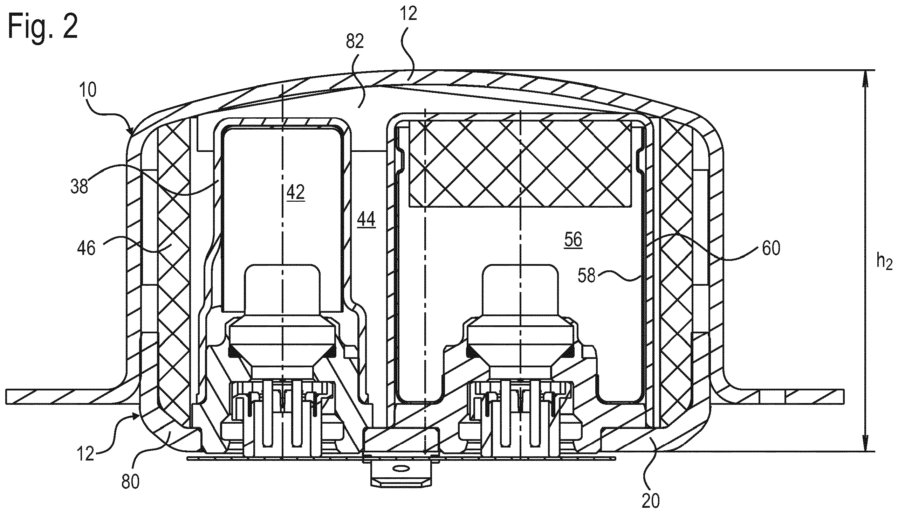

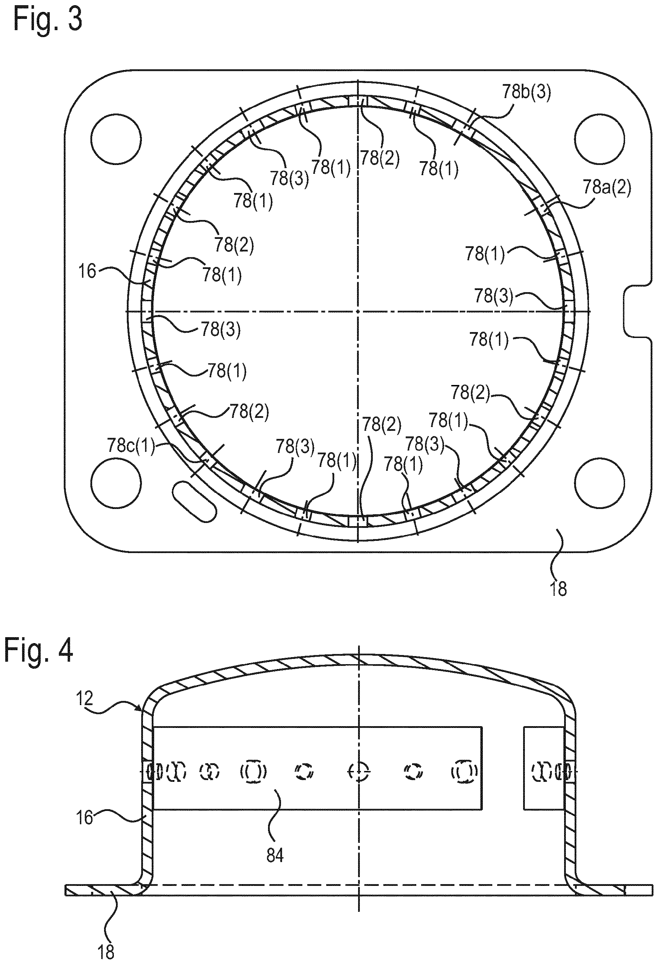

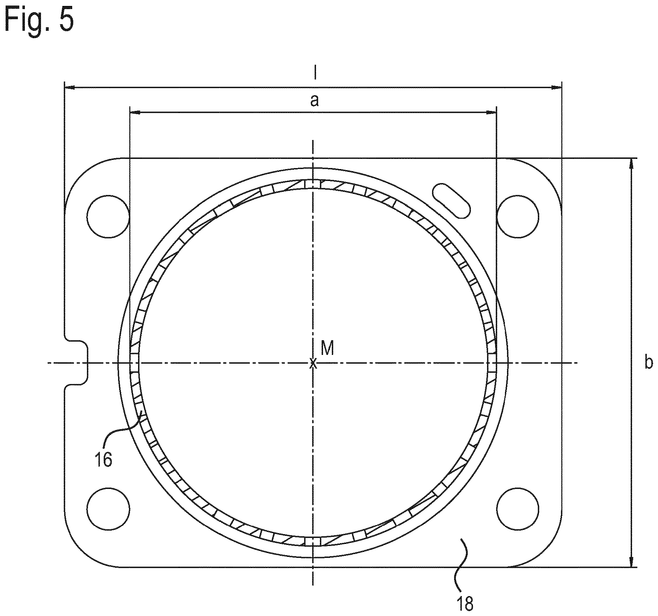

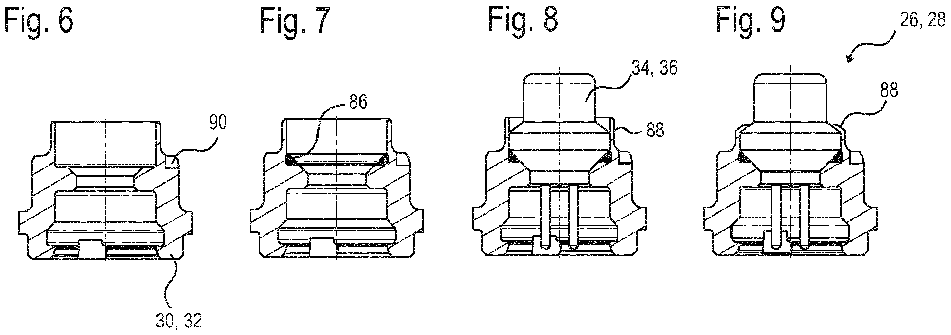

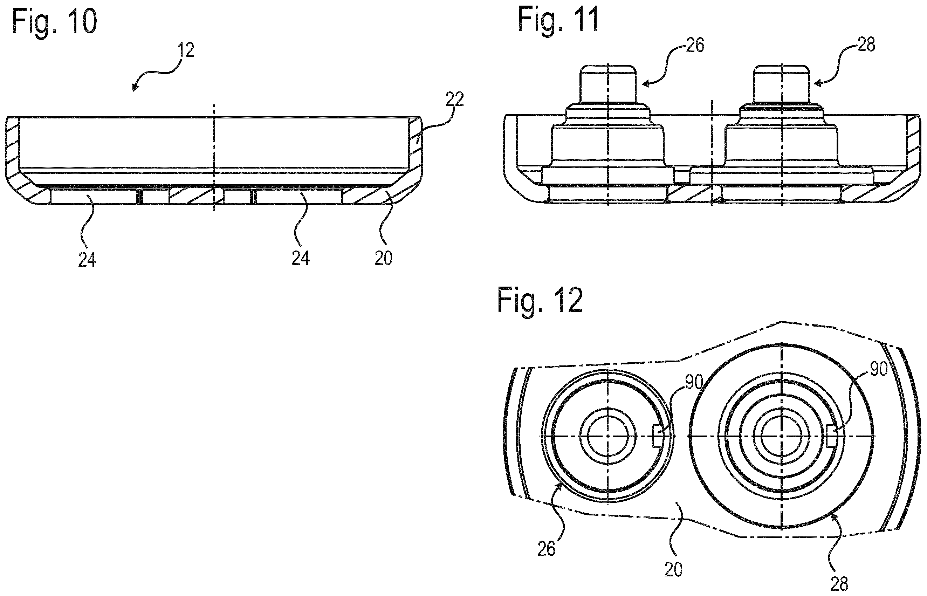

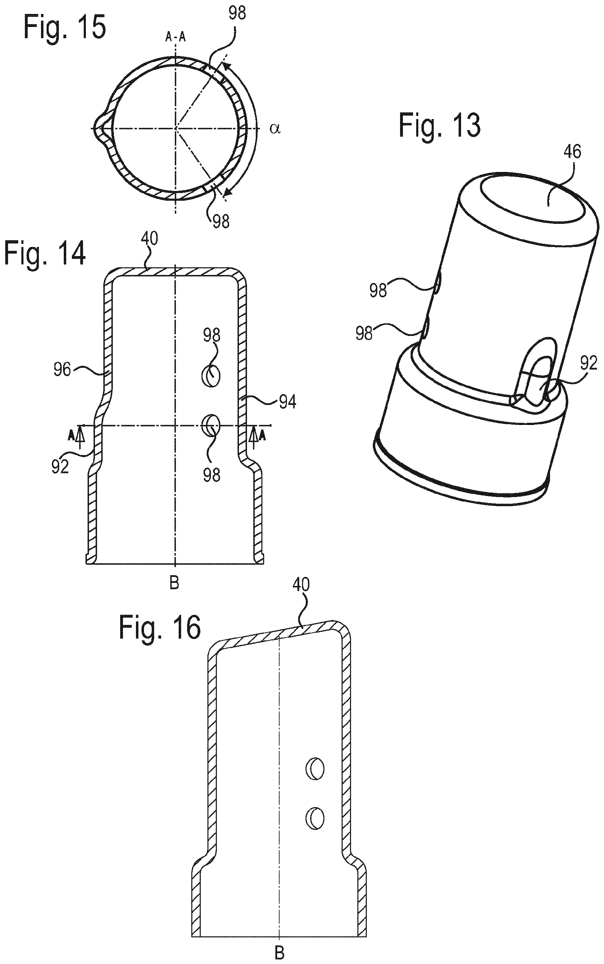

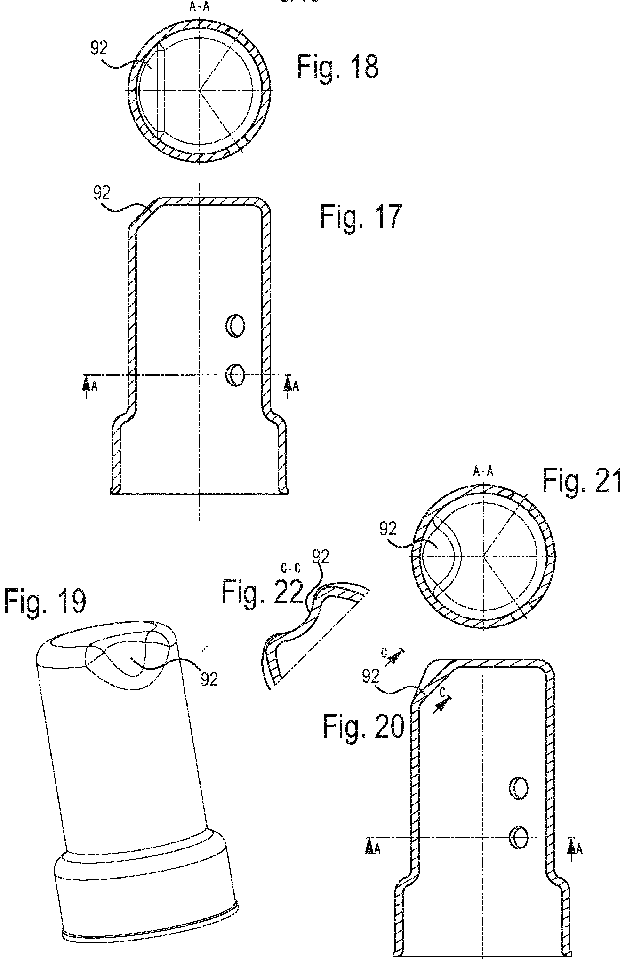

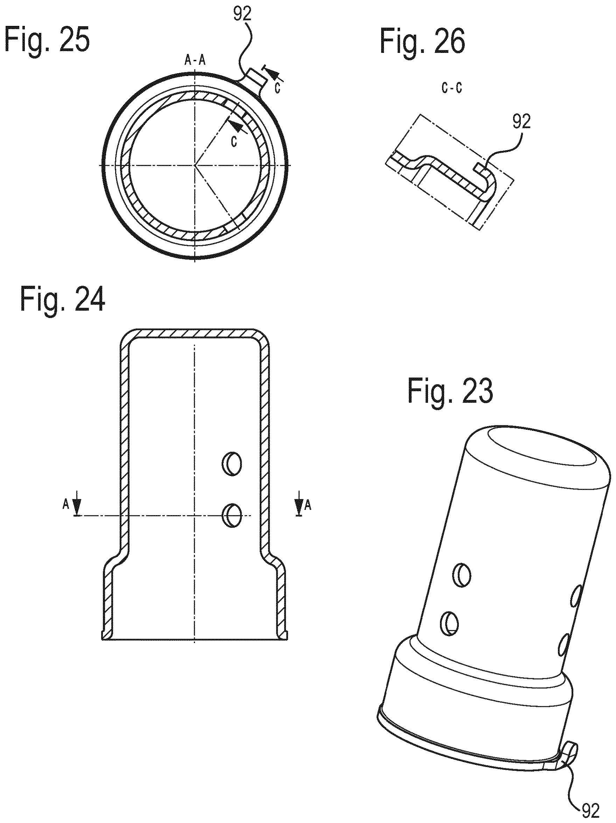

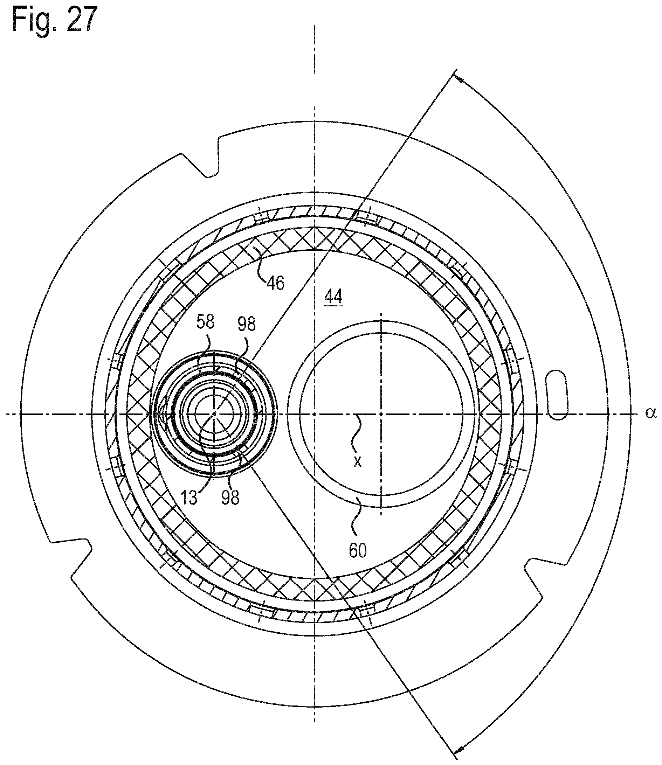

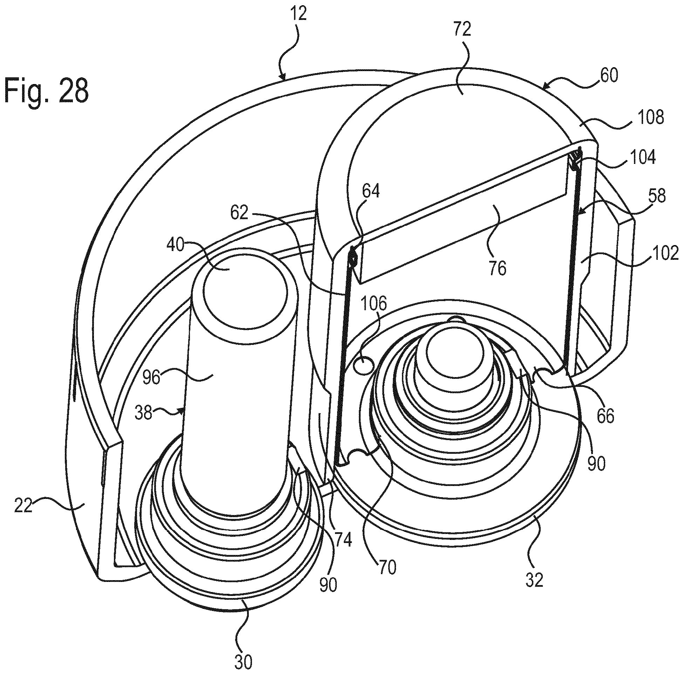

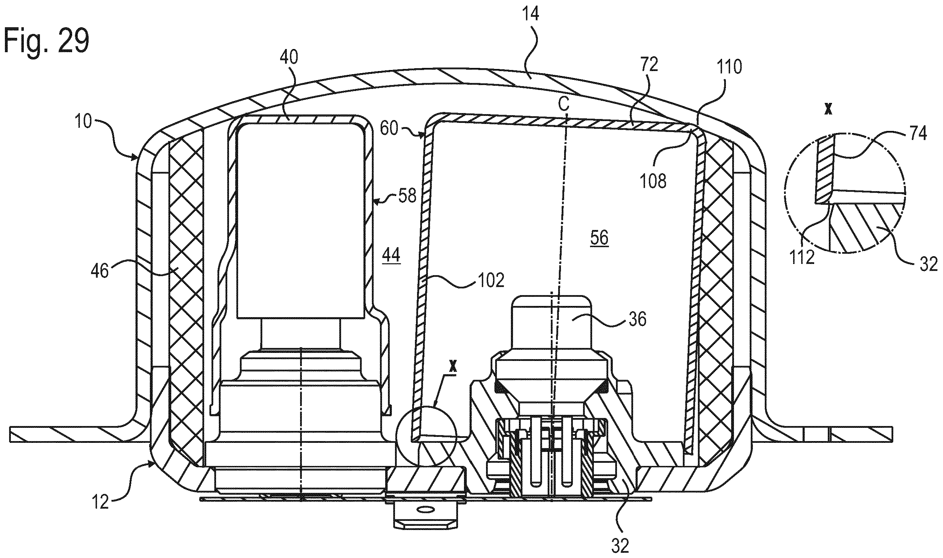

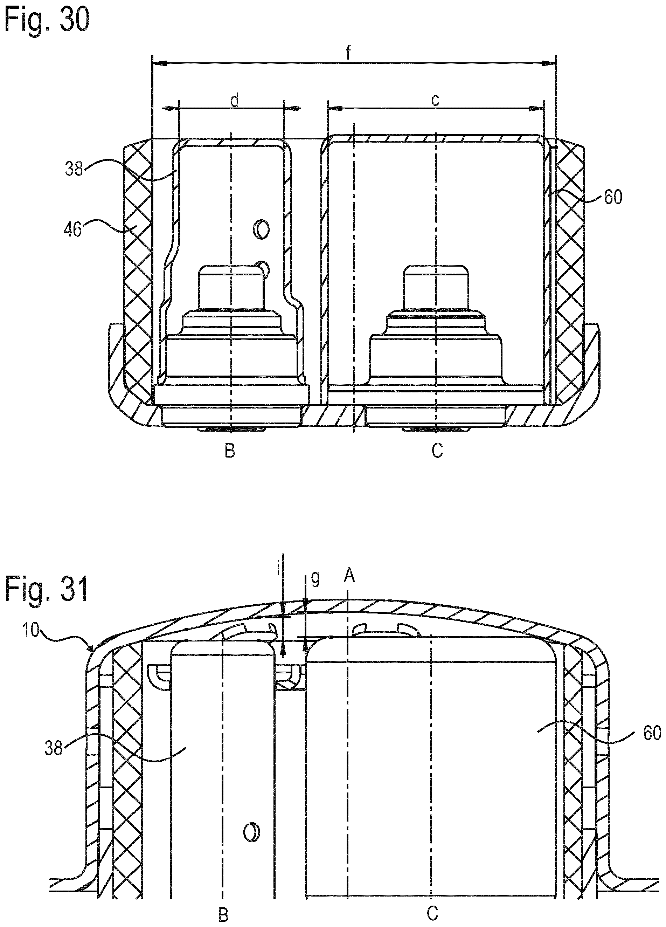

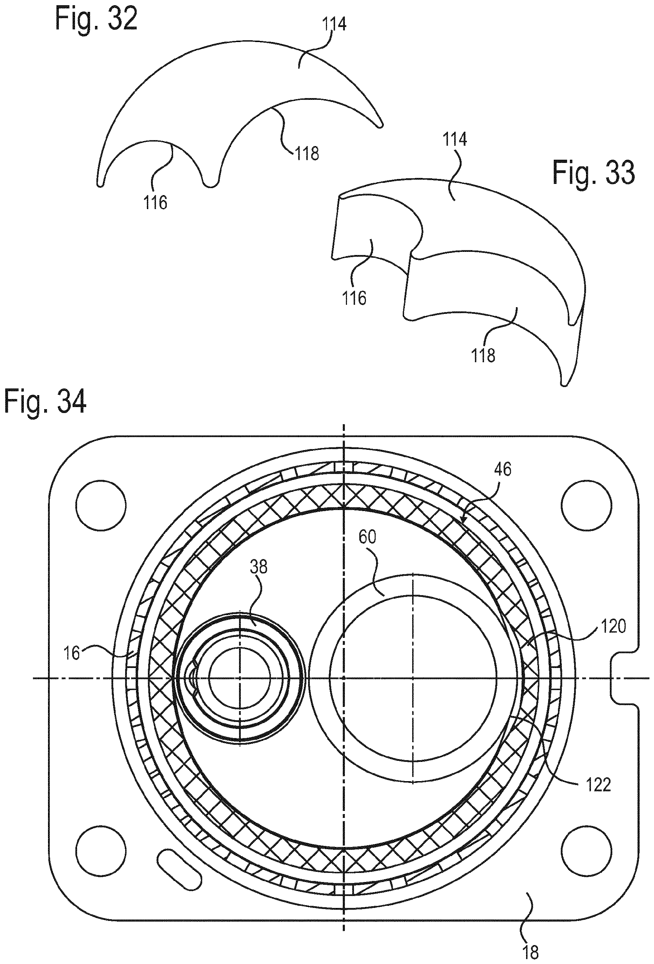

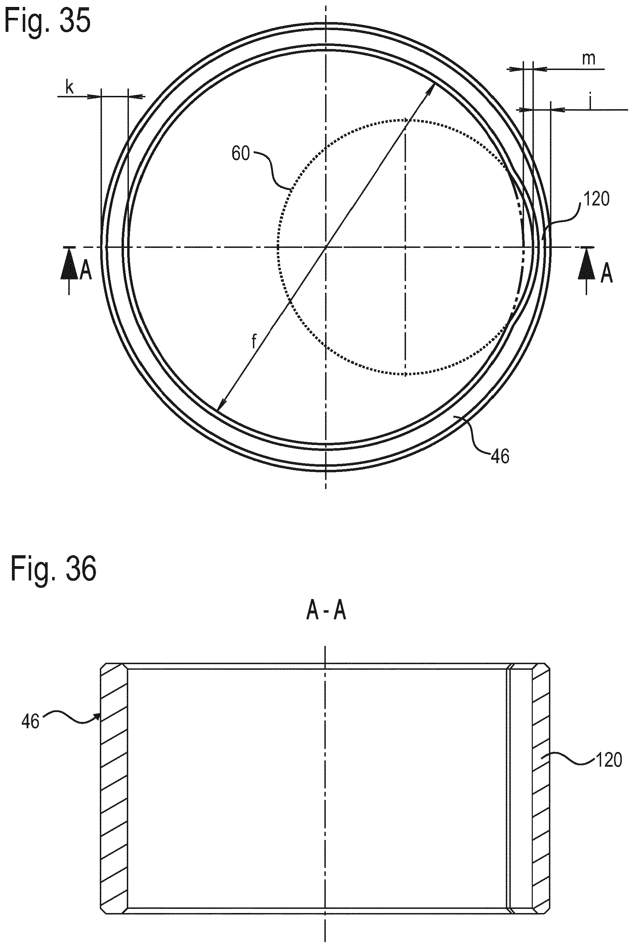

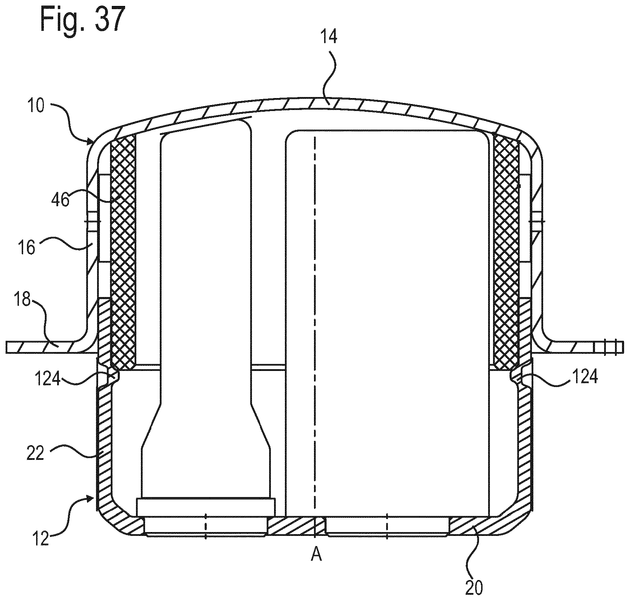

## Patentansprüche

1. Gasgenerator für eine Schutzeinrichtung in einem Fahrzeug mit einer Brennkammerhülse (60), die eine mit Treibstoff gefüllte Brennkammer (56) wenigstens teilweise umschließt, und die Brennkammerhülse (60) so ausgelegt ist, dass sie durch einen beim Abbrand des Treibstoffs entstehenden Druck ihre Lage und/oder Form so ändert, dass durch eine Austrittsöffnung (112), die aus der Brennkammer (56) herausführt, ein beim Abbrand des Treibstoffs entstehendes Abbrandgas freigegeben wird, **dadurch gekennzeichnet, dass** die Brennkammerhülse (60) auf ein Trägerbauteil des Gasgenerators aufgesteckt ist, wobei die Austrittsöffnung (112) dadurch entsteht, dass sich die Brennkammerhülse (60) wenigstens teilweise von dem Trägerbauteil löst.

2. Gasgenerator nach zumindest einem der vorhergehenden Ansprüche, **dadurch gekennzeichnet, dass** die Brennkammerhülse (60) auf einen Treibstoffkanister (58) aufgeschoben ist, der mit Treibstoff gefüllt ist, und einen Treibstoffkanisterboden (66) mit einem oder mehreren Löchern (106) aufweist, durch die das Abbrandgas zur Austrittsöffnung (112) gelangen kann, wobei vorzugsweise das bzw. die Löcher (106) im Treibstoffkanisterboden (66) erst durch den beim Abbrand des Treibstoffs entstehenden Druck und ein dadurch bedingtes Aufreißen des Treibstoffkanisterbodens (66) gebildet wird bzw. werden.

3. Gasgenerator nach zumindest einem der voranstehenden Ansprüche, **dadurch gekennzeichnet, dass** die Brennkammerhülse (60) durch den Druck auf einen Deckenabschnitt (14) eines Diffusors (10) des Gasgenerators zu bewegbar ist, wobei die Bewegung vorzugsweise durch den Deckenabschnitt (14) begrenzt ist.

4. Gasgenerator nach Anspruch 3, **dadurch gekennzeichnet, dass** sich die Brennkammerhülse (60) teilweise am Deckenabschnitt (14) des Diffusors (10) abstützt, vorzugsweise bereits vor einer Aktivierung des Gasgenerators, und durch den Druck ein Kippen und/oder eine ungleichmäßige Verformung der Brennkammerhülse (60) hervorgerufen wird.

5. Gasgenerator nach zumindest einem der vorhergehenden Ansprüche, **dadurch gekennzeichnet, dass** der Gasgenerator eine Anzünderhülse (38) hat, die einen Anzünder (34) und eine insbesondere mit einer Verstärkerladung gefüllte Anzünderkammer (42) wenigstens teilweise umschließt und an eine mit Treibstoff gefüllte erste Brennkammer (44) angrenzt, wobei die Anzünderhülse (38) bezogen auf eine Mittelachse B der Anzünderhülse (38) in Umfangsrichtung ungleichmäßig verteilte Überströmöffnungen (98) aufweist.

6. Gasgenerator nach Anspruch 5, **dadurch gekennzeichnet, dass** die Überströmöffnungen (98) in Umfangsrichtung einen maximalen Winkelbereich α definieren, der sich zu beiden Seiten einer Verbindungslinie x zwischen der Mittelachse B der Anzünderhülse (38) und dem von der Mittelachse B maximal entfernten Abschnitt des Filters (46) erstreckt, wobei der Winkelbereich α insbesondere stumpf ist und vorzugsweise zwischen 90° und 135°, weiter vorzugsweise zwischen 100° und 120° liegt und weiter vorzugsweise etwa 110° beträgt.

7. Gasgenerator nach Anspruch 6, **dadurch gekennzeichnet, dass** der Winkelbereich α Bereiche einschließt, in denen ein nicht durch Bauteile des Gasgenerators blockierter Abstand zum Filter (46) maximal ist.

8. Gasgenerator nach mindestens einem der Ansprüche 6 bis 7, **dadurch gekennzeichnet, dass** der Winkelbereich α ein in der ersten Brennkammer angeordnetes Brennkammerbauteil, insbesondere die Brennkammerhülse (60), einschließt, welches eine/die zweite Brennkammer (56) umgibt, die selbst wiederum wenigstens teilweise von der ersten Brennkammer (44) umgeben ist.

9. Gasgenerator nach zumindest einem der vorhergehenden Ansprüche 5 bis 8, **dadurch gekennzeichnet, dass** sowohl die Anzünderhülse (38) durch den beim Abbrand der Verstärkerladung entstehenden Druck als auch die Brennkammerhülse (60) durch den beim Abbrand des Treibstoffs entstehenden Druck angehoben werden, wobei durch das Anheben der Anzünderhülse (38) keine Austrittsöffnung freigegeben wird.

10. Gasgenerator nach zumindest einem der vorhergehenden Ansprüche 5 bis 9, **dadurch gekennzeichnet, dass** die erste Brennkammer (44) einer ersten Aktivierungsstufe des Gasgenerators zugeordnet ist und auf einer Seite durch einen Deckel geschlossen ist, wobei zwischen dem Treibstoff und dem Deckel ein erster Füllkörper (82) angeordnet ist, wobei der erste Füllkörper (82) wenigstens eine Aussparung (116, 118) aufweist, in die eine Hülse, insbesondere die Anzünderhülse (38), die der ersten Aktivierungsstufe des Gasgenerators zugeordnet ist, oder die Brennkammerhülse (60), die einer zweiten Aktivierungsstufe des Gasgenerators zugeordnet ist, hineinragt, wobei der erste Füllkörper (82) zwei Aussparungen (116, 118) unterschiedlicher Größe aufweist.

11. Gasgenerator nach Anspruch 10, **dadurch gekennzeichnet, dass** der erste Füllkörper (82) wenigstens zweiteilig ausgeführt ist, wobei vorzugsweise die zwei Teilkörper (114) jeweils die Form eines Doppelhalbmonds aufweisen.

12. Gassackmodul für ein Fahrzeug, mit einem Gassack, der ein Volumen von 40 bis 60 Liter aufweist, **gekennzeichnet durch** einen Gasgenerator nach einem der Ansprüche 1 bis 11.

13. Gassackmodul für ein Fahrzeug, mit einem Gassack, der ein Volumen von 60 bis 135 Liter aufweist, **gekennzeichnet durch** einen Gasgenerator nach einem der Ansprüche 1 bis 11.

## Claims

1. An inflator for a protection device in a vehicle, comprising a combustion chamber sleeve (60) which at least partially encloses a combustion chamber (56) filled with fuel and the combustion chamber sleeve (60) is designed such that it changes its position and/or shape by a pressure formed during combustion of the fuel so as to a combustion gas formed during combustion of the fuel is released through a discharge orifice (112) leading out of the combustion chamber (56), **characterized in that** the combustion chamber sleeve (60) is attached to a support component of the inflator, wherein the discharge orifice (112) is formed by the fact that the combustion chamber sleeve (60) detaches at least partially from the support component.

2. The inflator according to at least one of the preceding claims, **characterized in that** the combustion chamber sleeve (60) is slipped onto a fuel canister (58) filled with fuel having a fuel canister bottom (66) including one or more holes (106) through which the combustion gas can flow to the discharge orifice (112), wherein preferably the hole(s) (106) in the fuel canister bottom (66) is/are formed as late as by the pressure developed during combustion of the fuel and tearing of the fuel canister bottom (66) caused thereby.

3. The inflator according to at least one of the preceding claims, **characterized in that** due to the pressure the combustion chamber sleeve (60) is movable toward a ceiling portion (14) of a diffuser (10) of the inflator, wherein the movement is preferably restricted by the ceiling portion (14).

4. The inflator according to claim 3, **characterized in that** the combustion chamber sleeve (60) is partly supported on the ceiling portion (14) of the diffuser (10), preferably already prior to an activation of the inflator, and a tilting and/or uneven deformation of the combustion chamber sleeve (60) is caused by the pressure.

5. The inflator according to at least one of the preceding claims, **characterized in that** the inflator comprises an igniter sleeve (38) which at least partially encloses an igniter (34) and igniter chamber (42) especially filled with a booster charge and is adjacent to a first combustion chamber (44) filled with fuel, wherein the igniter sleeve (38) - related to a central axis B of the igniter sleeve (38) - has overflow orifices (98) unevenly distributed in circumferential direction.

6. The inflator according to claim 5, **characterized in that** the overflow orifices (98) in circumferential direction define a maximum angular range α that extends to both sides of a connecting line x between the central axis B of the igniter sleeve (38) and the portion of the filter (46) maximally distant from the central axis B, wherein the angular range α is obtuse and preferably ranges between 90° and 135°, further preferably between 100° and 120° and further preferably is approx. 110°.

7. The inflator according to claim 6, **characterized in that** the angular range α includes areas which have a maximum distance from the filter (46) not blocked by components of the inflator.

8. The inflator according to at least one of the claims 6 to 7, **characterized in that** the angular range α encloses a combustion chamber component arranged in the first combustion chamber, especially the combustion chamber sleeve (60) which surrounds a/the second combustion chamber (56) which in turn is at least partially surrounded by the first combustion chamber (44).

9. The inflator according to at least one of the preceding claims 5 to 8, **characterized in that** both the igniter sleeve (38) is raised by the pressure developed during combustion of the booster charge as well as the combustion chamber sleeve (60) is raised by the pressure developed during combustion of the fuel, wherein no discharge orifice is released by raising the igniter sleeve (38).

10. The inflator according to at least one of the preceding claims 5 to 9, **characterized in that** the first combustion chamber (44) is associated with a first activating stage of the inflator and is closed on one side by a lid, wherein a first fill member (82) is disposed between the fuel and the lid, wherein the first fill member (82) has at least one recess (116, 118) into which a sleeve, especially the igniter sleeve (38) associated with the first activating stage of the inflator or the combustion chamber sleeve (60) associated with a second activating stage of the inflator projects, wherein the first fill member (82) has two recesses (116, 118) of different size.

11. The inflator according to claim 10, **characterized in that** the first fill member (82) is designed in at least two parts, wherein preferably each of the two partial members (114) has the shape of a double half moon.

12. An airbag module for a vehicle comprising an airbag having a volume of 40 to 60 liters, **characterized by** an inflator according to any one of the claims 1 to 11.

13. An airbag module for a vehicle comprising an airbag having a volume of 60 to 135 liters, **characterized by** an inflator according to any one of the claims 1 to 11.

## Revendications

1. Générateur de gaz pour un dispositif de protection dans un véhicule, avec un étui de chambre de combustion (60) qui entoure au moins partiellement une chambre de combustion (56) remplie de propergol, et l'étui de chambre de combustion (60) est conçu de telle sorte qu'il modifie sa position et/ou sa forme sous l'effet d'une pression produite lors de la combustion du propergol, de telle sorte qu'un gaz de combustion produit lors de la combustion du propergol est libéré par une ouverture de sortie (112), qui sort de la chambre de combustion (56), **caractérisé en ce que** l'étui de chambre de combustion (60) est emmanché sur une pièce support du générateur de gaz, pour lequel l'ouverture de sortie (112) est produite par le fait que l'étui de chambre de combustion (60) se sépare au moins partiellement de la pièce support.

2. Générateur de gaz selon au moins l'une des revendications précédentes, **caractérisé en ce que** l'étui de la chambre de combustion (60) est poussé sur un réservoir de propergol (58) qui est rempli de propergol et présente un fond de réservoir de carburant (66) avec un ou plusieurs trous (106) à travers lesquels le gaz de combustion peut passer vers l'ouverture de sortie (112), pour lequel le ou les trous (106) de préférence sur le fond du réservoir de propergol (66) n'est ou ne sont formés que par la pression survenant pendant la combustion du propergol et une déchirure du fond du réservoir de propergol (66) provoquée par celle-ci.

3. Générateur de gaz selon au moins l'une des revendications précédentes, **caractérisé en ce que** l'étui de la chambre de combustion (60) peut être déplacé par la pression vers une section couvrante (14) d'un diffuseur (10) du générateur de gaz, pour lequel le mouvement est de préférence limité par la section couvrante (14).

4. Générateur de gaz selon la revendication 3, **caractérisé en ce que** l'étui de la chambre de combustion (60) est partiellement soutenu sur la section couvrante (14) du diffuseur (10), de préférence déjà avant l'activation du générateur de gaz, et la pression provoque un basculement et/ou une déformation non uniforme de l'étui de la chambre de combustion (60).

5. Générateur de gaz selon au moins l'une des revendications précédentes, **caractérisé en ce que** le générateur de gaz présente un étui d'allumeur (38) qui entoure au moins partiellement un allumeur (34) et une chambre d'allumage (42) remplie en particulier d'une charge renforçatrice et qui se raccorde à une première chambre de combustion (44) remplie de propergol, pour lequel l'étui d'allumeur (38) présentant des ouvertures de débordement (98) réparties de manière non uniforme dans la direction périphérique par rapport à un axe central B de l'étui d'allumeur (38).

6. Générateur de gaz selon la revendication 5, **caractérisé en ce que** les ouvertures de débordement (98) définissent dans la direction périphérique une plage angulaire maximale a, laquelle s'étend de part et d'autre d'une ligne de liaison x entre l'axe central B de l'étui d'allumeur (38) et la partie du filtre (46) qui est à une distance maximum de l'axe central B, pour lequel la plage angulaire α est en particulier obtuse et se situe de préférence entre 90° et 135°, de préférence encore entre 100° et 120°, et de préférence encore à environ 110°.

7. Générateur de gaz selon la revendication 6, **caractérisé en ce que** la plage angulaire α comprend des régions dans lesquelles est maximale une distance au filtre (46) non bloquée par des composants du générateur de gaz.

8. Générateur de gaz selon au moins l'une des revendications 6 à 7, **caractérisé en ce que** la plage angulaire α comprend un composant de chambre de combustion disposé dans la première chambre de combustion, notamment l'étui de chambre de combustion (60), qui entoure une/la deuxième chambre de combustion (56), elle-même au moins partiellement entourée par la première chambre de combustion (44).

9. Générateur de gaz selon au moins l'une des revendications précédentes 5 à 8, **caractérisé en ce que** ainsi que l'étui d'allumeur (38) est soulevé par la pression produite lors de la combustion de la charge renforçatrice, l'étui de la chambre de combustion (60) est soulevé par la pression produite lors de la combustion du propergol, pour lequel aucune ouverture de sortie n'est libérée par le soulèvement de l'étui d'allumeur (38).

10. Générateur de gaz selon au moins l'une des revendications précédentes 5 à 9, **caractérisé en ce que** la première chambre de combustion (44) est associée à une première étape d'activation du générateur de gaz et est fermée d'un côté par un couvercle, pour lequel un premier compensateur de volume (82) est disposé entre le propergol et le couvercle, pour lequel le premier compensateur de volume (82) présente au moins un évidement (116, 118), dans laquelle fait saillie un étui, en particulier l'étui d'allumeur (38), qui est associé au premier étage d'activation du générateur de gaz, ou l'étui de la chambre de combustion (60), qui est associé à un deuxième étage d'activation du générateur de gaz, pour lequel le premier compensateur de volume corps (82) présente deux évidements (116, 118) de tailles différentes.

11. Générateur de gaz selon la revendication 10, **caractérisé en ce que** le premier compensateur de volume (82) est conçu en au moins deux parties, de préférence les deux parties de compensateur (114) ont chacune la forme d'un double croissant.

12. Module airbag pour un véhicule, comprenant un coussin gonflable ayant un volume de 40 à 60 litres, **caractérisé par** un générateur de gaz selon l'une quelconque des revendications 1 à 11.

13. Module airbag pour un véhicule, comprenant un coussin gonflable ayant un volume de 60 à 135 litres, **caractérisé par** un générateur de gaz selon l'une quelconque des revendications 1 à 11.
